# EUROPÄISCHE PATENTSCHRIFT

(11) **EP 2 045 763 B1**
(45) Veröffentlichungstag und Bekanntmachung des Hinweises auf die Patenterteilung: **11.04.2012**
(21) Anmeldenummer: 07405294.5
(22) Anmeldetag: 03.10.2007
(51) Int. Cl.: G06K 19/077

(54) **Verfahren zum Herstellen von Datenträgern, Vorrichtung zum Durchführen des Verfahrens sowie Vorprodukt zum Herstellen von Datenträgern**
Method for manufacturing data media, device for implementing the method and preliminary product for manufacturing data media
Procédé de fabrication de supports de données, dispositif d'exécution du procédé ainsi que produit semi-fini destiné à fabriquer des supports de données

(43) Veröffentlichungstag der Anmeldung: 08.04.2009
(73) Patentinhaber: Trüb AG, CH-5001 Aarau (CH)
(72) Erfinder: Hahn, Roland, 4600 Olten (CH)
(74) Vertreter: Groner, Manfred

(56) Entgegenhaltungen:
- DE-A1- 10 257 111
- US-A1- 2001 011 962

## Beschreibung

Die Erfindung betrifft ein Verfahren zum Herstellen von Datenträgern nach dem Oberbegriff des Anspruchs 1. Ein solches Verfahren ist im Stand der Technik aus der US 2001/0011962 A bekannt geworden.

Solche Datenträger werden auch als Dual-Interface-Karten oder Chipkarten bezeichnet. Die Datenträger haben in der Regel Kreditkartengrösse und besitzen wenigstens zwei Funktionen mit einem entsprechenden implantierten Chip. Dieser Chip ist ein an sich bekanntes elektronisches Bauteil, das in einem kompakten Modul eingebaut ist, welches zusätzlich noch an der Unterseite wenigstens zwei Kontaktschnittstellen aufweist. Damit können der Kartenkörper mit eingebauter Antenne und das Modul so vereint werden, dass damit die genannte an sich bekannte Dual-Funktionen ausführbar werden. Der Körper solcher Datenträger besteht im Wesentlichen aus Kunststoff, vorzugsweise aus mehreren Schichten, die laminiert sind. Die Anzahl der Schichten bzw. Lagen kann unterschiedlich sein. Grundsätzlich ist auch ein Körper aus lediglich einer Lage denkbar. Die Schichten bzw. Lagen bestehen beispielsweise aus PVC oder Polykarbonat.

Die elektrische Kontaktierung der Antenne kann nur dann zuverlässig erfolgen, wenn die Enden der Antenne exakt unter dem Chipmodul zu liegen kommen. Beim Implantieren des Moduls können durch Fräsen die Antennenenden oder sogenannte Pads oder sonstigen Anschlusskonstruktionen freigelegt werden. Die freigelegten Anschlüsse müssen mit der oberen Kontaktierung der Chipmodule übereinstimmen, damit die elektrische Verbindung zuverlässig hergestellt werden kann.

Zum Verbinden des Chips mit den Antennenenden werden auf diese Klebstoffteile aufgetragen, die elektrisch leitend sind. Solche Klebstoffteile werden in an sich bekannter Weise beispielsweise aus leitendem Silikon hergestellt. Nach dem Aushärten der Klebstoffteile wird das Modul unter Druckbeaufschlagung dieser Klebstoffteile in die entsprechende Ausnehmung implantiert.

Ein Verfahren der genannten Art ist im Stand der Technik durch die DE 102 57 111 bekannt geworden. Bei diesem Verfahren werden in die genannte Aussparung Klebstoffteile zu einem sogenannten elektrisch leitenden Bump aufgetragen. Die aufgetragenen Klebstoffteile sind hierbei 0,05 bis 0,15 mm höher als obere Randbereiche der Aussparungen, in welchen die Klebstoffteile angeordnet sind. Beim Einbau des Chipmoduls werden diese Klebstoffteile durch die Modulanschlüsse des Chipmoduls nach unten gedrückt. Sie erfahren hierdurch eine Ausdehnung in der Ebene des Kartenkörpers. Dieses Verfahren hat den Nachteil, dass die genaue Dosierung zum Erreichen des genannten Überstandes und auch das nachfolgende Verfahren vergleichsweise aufwändig sind. Im Stand der Technik sind zudem Verfahren bekannt, bei denen der Auftrag der Klebstoffteile mit Kameras detektiert wird. Fehlerhafte Dosierungen können damit erkannt und die entsprechenden Karten gemeldet und ausgeschleusst werden.

Der Erfindung liegt die Aufgabe zu Grunde, ein Verfahren der genannten Art zu schaffen, welches die genannten Nachteile vermeidet.

Die Aufgabe ist bei einem gattungsgemässen Verfahren gemäss Anspruch 1 gelöst. Durch das Verformen, das sehr einfach und kostengünstig beispielsweise mit einem Formstempel erreicht werden kann, hat den wesentlichen Vorteil, dass eine definierte Höhe und Form der Klebstoffteile erreicht werden kann. Eine Überwachung mit Kameras ist nicht erforderlich. Aufgrund der bestimmten Form und insbesondere Höhe der Klebstoflteile kann sichergestellt werden, dass die Anpresskraft dieser Klebstoffteile am Chip-Modul beim Implantieren immer genau gleich ist. Diese Anpresskraft kann durch entsprechende Formung der Klebstoffteile exakt eingestellt werden. Aufgrund der exakt eingestellten Anpresskraft kann die Funktionssicherheit des Datenträgers wesentlich verbessert werden.

Vorzugsweise werden die Klebststoffteile so geformt, dass sie die Ausnehmung nicht überstehen. Dies hat den wesentlichen Vorteil, dass die Körper bzw. die Kartenkörper nach dem Auftragen der Klebstoffteile gestapelt werden können. Da die Klebstoffteile die Ausnehmung nicht überstehen, können Abdrücke an benachbarten Kartenkörpern sicher vermieden werden. Die Kartenkörper können somit vor dem Implantieren des Moduls gestapelt werden, was einen einfacheren Verfahrensablauf ermöglicht.

Die dosiert aufgetragenen Klebstoffteile werden gemäss einer Weiterbildung der Erfindung mit einem Formstempel geformt. Dieser Formstempel besitzt eine entsprechende Formfläche. Die Klebstoffteile werden vorzugsweise zu einer im wesentlichen rotationsparaboloiden Form dosiert aufgetragen. Diese Teile überragen vor dem Formen vorzugsweise die Ausnehmung. Durch das Formen wird die Höhe der Klebstoffteile vermindert und diese werden entsprechend breiter.

Das Formen der Klebstoffteile erfolgt vorzugsweise erst nach dem Bilden einer Haut. Dadurch kann verhindert werden, dass der Formstempel sich mit den Klebstoffteilen verbindet. Die Klebstoffteile werden vorzugsweise aus einem flüssigen Klebstoff auf Silikonbasis hergestellt. Es sind aber grundsätzlich auch andere elektrisch leitende Kleber denkbar.

Die Erfindung betrifft zudem eine Vorrichtung zum Durchführen des erfindungsgemässen Verfahrens. Diese Vorrichtung besitzt Mittel zum Dosieren der Klebstoffteile sowie Mittel zum Formen der auf den Körper aufgetragenen Klebstoffteile. Zum Dosieren können an sich bekannte Dosiervorrichtungen verwendet werden. Die Mittel besitzen insbesondere einen Formstempel, der vertikal bewegbar und mit einer definierten Kraft und einem definierten Weg an die Klebstoffteile angepresst werden kann. Hierbei ist eine Distanzmessung möglich.

Die Erfindung betrifft zudem ein Vorprodukt zum Herstellen eines Datenträgers, insbesondere einer Karte, sowie ein aus dem Vorprodukt hergestellter Datenträger, der vorzugsweise ein kartenförmiger Datenträger ist.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung näher erläutert. Es zeigen:
- Figur 1: schematisch einen Schnitt durch einen Teil eines Körpers mit eingebauter und freigelegten Antenne,
- Figur 2: der Körper gemäss Figur 1, jedoch nach dem Auftragen eines Klebstoffteils,
- Figur 3: ein Schnitt gemäss Figur 1, jedoch nach dem Verformen des aufgetragenen Klebstoffteils und
- Figur 4: ein Schnitt durch einen Teil eines Datenträgers mit einem implantierten Modul

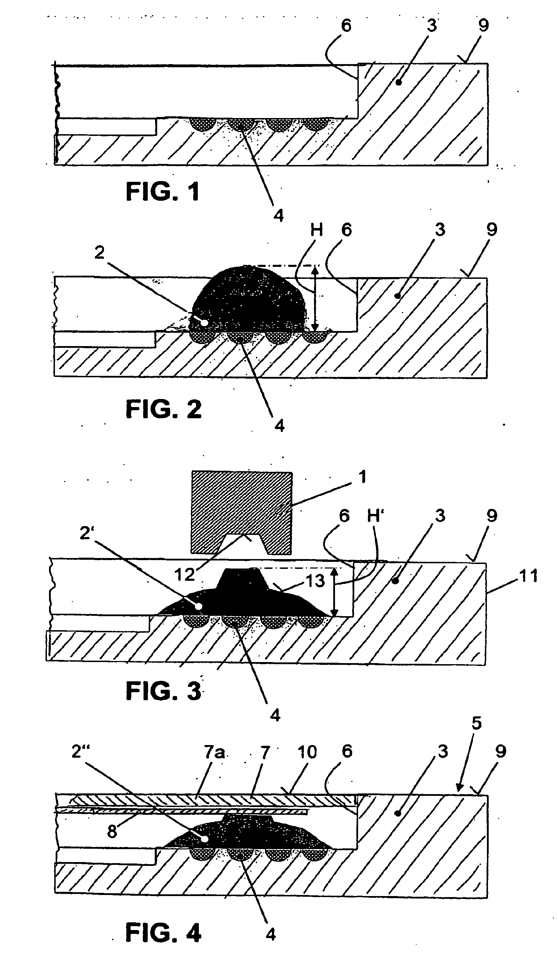

Die Figur 4 zeigt einen Datenträger 5, der eine sogenannte Dual-Interface Karte in Kreditkartengrösse ist. Der Datenträger 5 besitzt einen Kartenkörper 3, der für eine kontaktlose Funktion eine Antenne 4 aufweist, die in einer Ausnehmung 6 für einen elektrischen Kontakt mit einem Modul 7 freigelegt ist. Die Enden der Antenne 4 können beispielsweise in an sich bekannter Weise durch Fräsen freigelegt sein. In die Ausnehmung 6 ist ein Modul 7 eingesetzt, das hier lediglich abschnittsweise und schematisch gezeigt ist. Das Modul 7 besitzt an einer Unterseite einen Modulanschluss, über den der hier nicht gezeigt Chip des Moduls mit der Antenne für Elektrisch verbunden ist. Da der Chip mit den beiden Enden die Antenne 4 verbunden ist. Besitzt dieser entsprechend zwei Modulanschlüsse. In der Figur 4 somit lediglich einer dieser beiden Modulanschlüsse 8 gezeigt. Der Chip ist insbesondere ein Chip der sowohl über Kontakte als auch kontaktlos kontaktiert werden kann.

Das Modul 7 besitzt gemäss Figur 4 eine Oberseite 10, die im wesentlichen bündig ist zu einer Oberseite 9 des Kartenkörpers 3. Der elektrische Kontakt des Moduls 7 zur Antenne 4 wird mit einem Klebstoffteil 2" hergestellt, der aus einer elektrisch leitenden Substanz, beispielsweise und insbesondere aus einem gefüllten Klebstoff auf Siliconbasis hergestellt ist. Solche Klebstoffe sind dem Fachmann bekannt. Der Klebstoffteil 2" kontaktiert gemäss Figur 4 die Antenne 4 bzw. ein Antennenende sowie den Modulanschluss 8. Die mechanische Befestigung des Moduls 7 am Kartenkörper 3 erfolgt mit einem hier nicht gezeigten Kleber, der jedoch elektrisch nicht leitend ist. Solche Kleber sind ebenfalls dem Fachmann gut bekannt.

Nachfolgend wird anhand der Figuren 1 - 4 das Verfahren zum Herstellen des Datenträgers 5 näher erläutert.

Die Figur 1 zeigt den Kartenkörper 3 mit der Ausnehmung 6 und entsprechend einem freigelegten Ende der Antenne 4. Der Kartenkörper 3 besteht hier aus lediglich einer Schicht. Denkbar sind hier aber auch Kartenkörper 3, die aus mehreren Schichten bestehen. Das Material dieser Schichten kann an sich beliebig sein.

Zum Implantieren des Moduls 7 wird auf die freigelegte Antenne 4 mittels einer hier nicht gezeigten Dosiervorrichtung ein Klebstoffteil 2 aufgetragen. Dieses besitzt beispielsweise die Form eines Rotationsparapoloids. Die Figur 2 zeigt den aufgetragenen Kunststoffteil 2. In der gleichen Ausnehmung 6 wird im Abstand zum gezeigten Klebstoffteil 2 ein zweiter hier nicht gezeigter Klebstoffteil aufgetragen, der elektrisch mit dem anderen Ende der Antenne 4 verbunden ist. Die Klebstoffteile 2 werden in der Regel gleichzeitig in die Ausnehmung 6 aufgetragen. Wie ersichtlich, überragt der Klebstoffteil 2 die Ausnehmung 6 und somit die Oberseite 9 des Kartenkörpers 3.

Der aufgetragene Kunststoffteil 2 bzw. die beiden aufgetragenen Kunststoffteile 2 härten aus, so dass sich an deren Oberfläche eine hier nicht gezeigte Haut bildet. Sobald sich diese Haut gebildet hat, wird der Klebstoffteil 2 zu dem in Figur 3 gezeigten Klebstoffteil 2' geformt. Grundsätzlich könnte der Klebstoffteil 2 aber auch vor dem Bilden einer Haut geformt werden. Die in Figur 2 gezeigte Höhe H wird hierdurch verkleinert, so dass schliesslich die in Figur 3 gezeigte Höhe H' erreicht wird. Diese Höhe H' ist so bemessen, dass sie etwas insbesondere geringfügig kleiner ist als die Tiefe der Ausnehmung. Der geformte Klebstoffteil 2' überragt die Ausnehmung 6 somit nicht, wie die Figur 3 zeigt.

Das Formen des Klebstoffteils 2 erfolgt insbesondere mit einem Formstempel 1, der entsprechend der gewünschten Form eine Fläche 12 aufweist, mit welcher der Formstempel 1 am Klebstoffteil 2 angepresst wird. Der Formstempel 1 wird hierbei gemäss Figur 3 in Richtung des Pfeiles 14 gegen den Kunststoffteil 2 bewegt. Das Verformen erfolgt so, dass eine genau definierte Höhe H' erreicht wird. Die Höhe H' beträgt beispielsweise 0,1 bis 0,4 mm. Der Formstempel 1 ist an der Fläche 12 somit an der Prägefläche beispielsweise mit einem Kontakt vermindernden Kunststoff, beispielsweise aus einem fluorierten Kunststoff beschichtet. Alternativ kann der gesamte Formstempel 1 aus einem geeigneten Werkstoff hergestellt sein.

Der Kartenkörper 3' mit den beiden implantierten und geformten Klebstoffteilen 2' bildet ein Vorprodukt 11 und wird nun gestapelt. Durch entsprechende Lagerung dieses Stapels aus den Vorprodukten 11 werden die Klebstoffteile 2' ausgehärtet. Denkbar ist aber auch eine Inlineproduktion ohne Stapel. Anschliessend werden die Kartenkörper 3' vom Stapel genommen und in diese Kartenkörper 3' wird nun jeweils wenigstens ein Modul 7 implantiert. Hierbei wird das Modul 7 in die Ausnehmung 6 eingelegt und hierbei werden die Klebstoffteile 2' unter Druck vom Modul 7 beaufschlagt. Durch diese Beaufschlagung wird der in Figur 3 gezeigte Klebstoffteil 2' zu dem in Figur 4 gezeigten Klebstoffteil 2" verformt. Hierbei wird der genannte Kontakt des Moduls 7 bzw. des entsprechenden Chips zur Antenne 4 hergestellt. Das Modul 7 wird in die Ausnehmung 6 soweit hineingepresst, bis seine Oberseite 10 im Wesentlichen bündig zur Oberseite 9 ist. Die mechanische Verbindung des Moduls 7 mit dem Kartenkörper 3 erfolgt wie bereits erwähnt mit einem hier nicht gezeigten Kleber, der jedoch elektrisch nicht leitend ist.

### Bezugszeichenliste

- 1: Formstempel
- 2: Klebstoffteil
- 3: Kartenkörper
- 4: Antenne
- 5: Datenträger
- 6: Ausnehmung
- 7: Modul
- 7a: Randbereich
- 8: Modulanschlussteil (elektrischer Kontakt)
- 9: Oberseite Kantenkörper
- 10: Oberseite Modul
- 11: Vorprodukt
- 12: Prägefläche
- 13: Fläche

- H: Höhe

## Patentansprüche

1. Verfahren zum Herstellen von Datenträgern (5) mit einem Körper (3), der mindestens eine Ausnehmung (6) zum Implantieren mindestens eines elektronischen Moduls (7) mit Modulanschlüssen (8) in einem Randbereich des Moduls (7) und eine in den Körper (3) eingebettete Antenne (4) mit Antennenanschlüssen aufweist, die unterhalb des Randbereichs (7a) des implantierten elektronischen Moduls (7) angeordnet sind, wobei vor dem Implantieren des Moduls (7) Klebstoffteile (2) aus elastischem und leitfähigem Material auf die Antennenanschlüsse (4) aufgetragen und nach einem Aushärten der aufgetragenen Klebstoffteile (2) das Modul (7) unter Druckbeaufschlagung der Klebstoffteile (2) in die genannte Ausnehmung (6) implantiert wird, so dass das Modul (7) mit der Antenne (4) elektrisch verbunden ist, **dadurch gekennzeichnet, dass** die Klebstoffteile (2) vor dem Implantieren des Moduls (7) geformt werden.

2. Verfahren nach Anspruch 1, **dadurch gekennzeichnet, dass** die Klebstoffteile (2) mit einem Formstempel (1) geformt werden.

3. Verfahren nach Anspruch 1 oder 2, **dadurch gekennzeichnet, dass** die Klebstoffteile (2) zu einem im Wesentlichen rotationsparaboloiden Teil dosiert und auf den Körper (3) aufgetragen werden.

4. Verfahren nach einem der Ansprüche 1 bis 3, **dadurch gekennzeichnet, dass** die Klebstoffteile (2) so geformt werden, dass sie eine Oberseite (9) des Körpers (3) nicht überragen.

5. Verfahren nach einem der Ansprüche 1 bis 4, **dadurch gekennzeichnet, dass** die Klebstoffteile (2) nach ihrem Auftragen auf den Körper (3) erst nach dem Bilden einer Haut geformt werden.

6. Verfahren nach einem der Ansprüche 1 bis 5, **dadurch gekennzeichnet, dass** die Klebstoffteile (2) aus einem Kleber auf Silikonbasis oder einem anderen geeigneten elektrisch leitenden Kleber hergestellt werden.

7. Verfahren nach einem der Ansprüche 1 bis 6, **dadurch gekennzeichnet, dass** der Körper (3) mit den aufgetragenen und geformten Klebstoffteilen (2) zuerst gestapelt und nachher die Module (7) implantiert werden.

8. Vorrichtung zum Durchführen des Verfahrens nach einem der Ansprüche 1 bis 7, **dadurch gekennzeichnet, dass** sie Mittel zum Dosieren der Klebstoffteile (2) sowie Mittel (1) zum Formen der aufgetragenen Klebstoffteile (2) vor dem Implantieren des Moduls (7) aufweist.

9. Vorrichtung nach Anspruch 8, **dadurch gekennzeichnet, dass** das Mittel (1) zum Formen der Klebstoffteile (2) einen Formstempel aufweist, der eine Prägefläche (12) aufweist.

10. Vorprodukt zum Herstellen eines Datenträgers (5), das Vorprodukt umfassend einen Körper (3), der mindestens eine Ausnehmung (6) zum Implantieren mindestens eines elektronischen Moduls (7) mit Modulanschlüssen (8) in einem Randbereich des elektronischen Moduls (7) und eine in den Körper (3) eingebettete Antenne (4) mit Antennenanschlüssen aufweist, die unterhalb des Randbereichs (7a) des zu implantierenden elektronischen Moduls (7) angeordnet sind, wobei in der mindestens einen Ausnehmung (6) Klebstoffteile (2) aus elastischem und leitfähigem Material auf die Antennenanschlüsse (4) aufgetragen sind, so dass das mindestens eine elektronische Modul (7) unter Druckbeaufschlagung der Klebstoffteile (2) mit der Antenne (4) elektrisch verbindbar ist, **dadurch gekennzeichnet, dass** wenigstens ein Klebstoffteil (2) an seiner mit dem mindestens einen elektronischen Modul (7) verbindbaren Oberseite geformt ist.

11. Vorprodukt nach Anspruch 10, **dadurch gekennzeichnet, dass** das wenigstens eine geformte Klebstoffteil (2') die Ausnehmung (6) nicht überragt.

12. Vorprodukt nach Anspruch 10 oder 11, **dadurch gekennzeichnet, dass** in der für das Modul (7) vorgesehenen Ausnehmung (6) zwei im Abstand zueinander angeordnete geformte Klebeteile (2') angeordnet sind.

13. Datenträger hergestellt aus einem Vorprodukt nach einem der Ansprüche 10 bis 12, mit wenigstens einem implantierten Modul (7) mit Modulanschlüssen (8) in einem Randbereich des Moduls (7), welches Modul (7) unter Druckbeaufschlagung der Klebstoffteile (2) mit der Antenne (4) elektrisch verbunden ist, **dadurch gekennzeichnet, dass** wenigstens ein Klebstoffteil (2) an seiner mit dem Modul (7) verbundenen Oberseite geformt ist.

## Claims

1. Method for producing data carriers (5) comprising a body (3), which has at least one cutout (6) for implanting at least one electronic module (7) having module connections (8) in an edge region of the module (7) and an antenna (4) embedded into the body (3) and having antenna connections arranged below the edge region (7a) of the implanted electronic module (7), wherein, before the module (7) is implanted, adhesive parts (2) composed of elastic and conductive material are applied to the antenna connections (4) and, after the applied adhesive parts (2) have cured, the module (7) is implanted into said cutout (6) with pressure being applied to the adhesive parts (2), such that the module (7) is electrically connected to the antenna (4), **characterized in that** the adhesive parts (2) are shaped before the module (7) is implanted.

2. Method according to Claim 1, **characterized in that** the adhesive parts (2) are shaped by means of a shaping die (1).

3. Method according to Claim 1 or 2, **characterized in that** the adhesive parts (2) are metered to give a part substantially having the form of a paraboloid of revolution and are applied to the body (3).

4. Method according to any of Claims 1 to 3, **characterized in that** the adhesive parts (2) are shaped such that they do not project above a top side (9) of the body (3).

5. Method according to any of Claims 1 to 4, **characterized in that** the adhesive parts (2), after they have been applied to the body (3), are shaped only after a skin has formed.

6. Method according to any of Claims 1 to 5, **characterized in that** the adhesive parts (2) are produced from a silicone-based adhesive or some other suitable electrically conductive adhesive.

7. Method according to any of Claims 1 to 6, **characterized in that** the body (3) together with the applied and shaped adhesive parts (2) are first stacked and the modules (7) are implanted afterwards.

8. Device for carrying out the method according to any of Claims 1 to 7, **characterized in that** it has means for metering the adhesive parts (2) and means (1) for shaping the applied adhesive parts (2) before the module (7) is implanted.

9. Device according to Claim 8, **characterized in that** the means (1) for shaping the adhesive parts (2) has a shaping die having an embossing surface (12).

10. Preliminary product for producing a data carrier (5), the preliminary product comprising a body (3), which has at least one cutout (6) for implanting at least one electronic module (7) having module connections (8) in an edge region of the electronic module (7) and an antenna (4) embedded into the body (3) and having antenna connections arranged below the edge region (7a) of the electronic module (7) to be implanted, wherein, in the at least one cutout (6), adhesive parts (2) composed of elastic and conductive material are applied to the antenna connections (4), such that the at least one electronic module (7) can be electrically connected to the antenna (4) with pressure being applied to the adhesive parts (2), **characterized in that** at least one adhesive part (2) is shaped at its top side that can be connected to the at least one electronic module (7).

11. Preliminary product according to Claim 10, **characterized in that** the at least one shaped adhesive part (2') does not project above the cutout (6).

12. Preliminary product according to Claim 10 or 11, **characterized in that** two shaped adhesive parts (2') arranged at a distance from one another are arranged in the cutout (6) provided for the module (7).

13. Data carrier produced from a preliminary product according to any of Claims 10 to 12, comprising at least one implanted module (7) having module connections (8) in an edge region of the module (7), which module (7) is electrically connected to the antenna (4) with pressure being applied to the adhesive parts (2), **characterized in that** at least one adhesive part (2) is shaped at its top side connected to the module (7).

## Revendications

1. Procédé de fabrication de supports de données (5) qui présentent un corps (3) doté d'au moins une découpe (6) permettant d'implanter au moins un module électronique (7), une bordure du module (7) étant dotée de bornes (8) de raccordement de module, et une antenne (4) dotée de bornes de raccordement d'antenne et incorporée dans le corps (3),
les bornes de raccordement d'antenne étant disposées en dessous de la bordure (7a) du module électronique (7) implanté,
des pièces adhésives (2) en matériau élastique et conducteur étant appliquées sur les bornes (4) de raccordement d'antenne avant l'implantation du module (7) et
le module (7) étant implanté dans ladite découpe (6) en appliquant une poussée sur les pièces adhésives (2) après que les pièces adhésives (2) ont été appliquées, de telle sorte que le module (7) soit relié à l'antenne (4),
**caractérisé en ce que**
les pièces adhésives (2) sont moulées avant l'implantation du module (7).

2. Procédé selon la revendication 1, **caractérisé en ce que** les pièces adhésives (2) sont moulées à l'aide d'un poussoir de moulage (1).

3. Procédé selon les revendications 1 ou 2, **caractérisé en ce que** les pièces adhésives (2) sont dosées en pièces essentiellement en forme de paraboloïde de rotation et sont appliquées sur le corps (3).

4. Procédé selon l'une des revendications 1 à 3, **caractérisé en ce que** les pièces adhésives (2) sont moulées de telle sorte que leur côté supérieur (9) ne déborde pas au-delà du corps (3).

5. Procédé selon l'une des revendications 1 à 4, **caractérisé en ce que** les pièces adhésives (2) ne sont moulées après leur application sur le corps (3) qu'après avoir formé une peau.

6. Procédé selon l'une des revendications 1 à 5, **caractérisé en ce que** les pièces adhésives (2) sont réalisées en un adhésif à base de silicone ou en un autre adhésif électriquement conducteur approprié.

7. Procédé selon l'une des revendications 1 à 6, **caractérisé en ce que** les corps (3) dotés des pièces adhésives (2) appliquées et moulées sont d'abord empilés, les modules (7) étant ensuite implantés.

8. Dispositif en vue de la mise en oeuvre du procédé selon l'une des revendications 1 à 7, **caractérisé en ce qu'**il présente un moyen de dosage des pièces adhésives (2) ainsi qu'un moyen (1) qui moule les pièces adhésives (2) appliquées, avant l'implantation du module (7).

9. Dispositif selon la revendication 8, **caractérisé en ce que** le moyen (1) de moulage des pièces adhésives (2) présente un poussoir de moulage doté d'une surface d'impression (12).

10. Pré-produit en vue de la fabrication d'un support de données (5), le pré-produit comportant un corps (3) qui présente
au moins une découpe (6) permettant d'implanter au moins un module électronique (7) doté de bornes (8) de raccordement de module dans une bordure du module électronique (7) et
une antenne (4) dotée de bornes de raccordement d'antenne et incorporée dans le corps (3),
les bornes de raccordement d'antenne étant disposées en dessous de la bordure (7a) du module électronique (7) à implanter,
des pièces adhésives (2) en un matériau élastique et conducteur étant appliquées dans la ou les découpes (6) sur les bornes (4) de raccordement d'antenne de telle sorte que le ou les modules électroniques (7) puissent être raccordés électriquement à l'antenne (4) en appliquant une poussée sur les pièces adhésives (2), **caractérisé en ce que**
la ou les pièces adhésives (2) sont moulées sur leur côté supérieur qui peut être relié au module ou aux modules électroniques (7).

11. Pré-produit selon la revendication 10, **caractérisé en ce que** la ou les pièces (2') en adhésif moulées ne débordent pas au-delà de la découpe (6).

12. Pré-produit selon les revendications 10 ou 11, **caractérisé en ce que** deux pièces (2') en adhésif moulées disposées à distance l'une de l'autre sont disposées dans la découpe (6) prévue pour le module (7).

13. Support de données réalisé à partir d'un pré-produit selon l'une des revendications 10 à 12 et présentant au moins un module implanté (7) doté de bornes (8) de raccordement de module dans une bordure du module (7), ce module (7) étant relié électriquement à l'antenne (4) en appliquant une poussée sur les pièces adhésives (2), **caractérisé en ce que**
au moins une pièce adhésive (2) est moulée sur son côté relié au module (7).
